Europäisches Patentamt

European Patent Office

Office européen des brevets

(19)

(11) Veröffentlichungsnummer: **0 175 114**
**B1**

(12) **EUROPÄISCHE PATENTSCHRIFT**

(45) Veröffentlichungstag der Patentschrift:
**16.03.88**

(21) Anmeldenummer: **85109797.2**

(22) Anmeldetag: **05.08.85**

(51) Int. Cl.⁴: **B 60 K 11/04,** F 01 P 11/08,
F 01 P 3/18

(54) **Kühleranordnung.**

(30) Priorität: **21.09.84 DE 8427839 U**

(43) Veröffentlichungstag der Anmeldung:
**26.03.86 Patentblatt 86/13**

(45) Bekanntmachung des Hinweises auf die Patenterteilung:
**16.03.88 Patentblatt 88/11**

(84) Benannte Vertragsstaaten:
**DE FR GB IT**

(56) Entgegenhaltungen:
**DE-A-3 317 488**
**DE-U-1 616 796**
**GB-A-2 060 524**
**US-A-4 059 080**

(73) Patentinhaber: **Dr.Ing.h.c. F. Porsche Aktiengesellschaft, Porschestrasse 42, D-7000 Stuttgart 40 (DE)**

(72) Erfinder: **Kretschmer, Helmut, Dipl.- Ing. FH, Hoehenstrasse 18, D-8752 Waldaschaff (DE)**
Erfinder: **Burst, Hermann, Telemannstrasse 10, D-7255 Rutesheim (DE)**
Erfinder: **Hochkönig, Manfred, Dipl.- Ing. FH, Rechbergstrasse 2, D-7141 Moeglingen (DE)**
Erfinder: **Koehr, Robert, Hirschhornring 39, D-6730 Neustadt 15 (DE)**
Erfinder: **Reichel, Anton, Ditzenbrunner Strasse 29, D-7257 Ditzingen 1 (DE)**

EP 0 175 114 B1

**Beschreibung**

Die Neuerung bezieht sich auf eine Kühleranordnung nach dem Oberbegriff des Anspruchs 1.

Aus der DE-A-33 17 488 ist eine derartige Kühlvorrichtung bekannt geworden, die in Fahrzeugquerrichtung zwei nebeneinander liegende Kühler einer Kühlvorrichtung umfasst, die einem gekapselten Brennkraftmaschinenraum zugeordnet ist.

Jeder Kühler weist rückseitig einen separaten Raum auf. Diese Räume sind über eine Zwischenwand sowie über eine rückseitige Wand gänzlich voneinander abgetrennt. Die Luft wird zumindest dem Kühler nicht, wie beim Anmeldegegenstand kanalisiert, zugeführt, noch ist rückseitig der Kühler einem beiden Luftströmungen aus den Kühlern gemeinsamer querliegender Abströmkanal gemäß dem Anmeldegegenstand vorgesehen. Vielmehr wird bei der bekannten Ausführung die abströmende Luft einmal über einen oberen Raum, zum weiteren einen zweiten Raum 15 abgeführt.

Aufgabe der Neuerung ist es, eine Kühleranordnung der eingangs genannten Art zu schaffen mit der eine günstige Zu und Abfuhr der eingeleiteten Luft zur Erzielung einer optimalen Kühlleistung erreicht wird.

Diese Aufgabe wird durch die kennzeichnenden Merkmale des Anspruchs 1 gelöst.

Die mit der Neuerung hauptsächlich erzielten Vorteile bestehen darin, daß den beiden Kühlern über separate kanalartige Räume Luft zugeführt wird und keine Mischung der zum Wasserkühler und zum Ölkühler zugeführten Luft erfolgt. Durch einen gemeinsamen Abführkanal hinter den beiden Kühlern wird in vorteilhafter Weise eine schnelle Durchströmung zu den Luftabführungsöffnungen gewährleistet. Diese Öffnungen sind - in bezug auf die Fahrtrichtung - vor dem Rad und in der Seitenwand der Aufbaustruktur angeordnet und vorzugsweise in einem Unterdruckbereich vorgesehen, so daß die Luft in optimaler Weise schnell abführbar ist. Außerdem wird eine ungünstige Beeinflussung z. B. der Bremsanlage durch erwärmte Luft sowie ein Auftriebeffekt des Vorderwagens durch unter den Fahrzeugboden geleitete große Luftmengen vermieden. Vielmehr kann die Luft ohne Behinderung von der Stirnseite des Fahrzeugs bis zu den Öffnungen in der Seitenwand strömen und ohne Verwirbelung abgeführt werden. In vorteilhafter Weise ist noch vorgesehen, daß diese seitlichen Ausströmöffnungen etwa in einer gleichen horizontalen Ebene mit den Einströmöffnungen im Bug des Fahrzeugs angeordnet sind. Die Anordnung der Öffnungen ergibt außerdem eine günstige Beeinflussung des Luftwiderstandswertes. Durch zusätzliche bodenseitige oder andere Abströmöffnungen können geringe Luftmengen abgezweigt werden, um eine zu große Beaufschlagung der Kühler mit Luft zu vermeiden.

Ein Ausführungsbeispiel der Neuerung ist in der Zeichnung dargestellt und wird im folgenden näher beschrieben.

Es zeigt

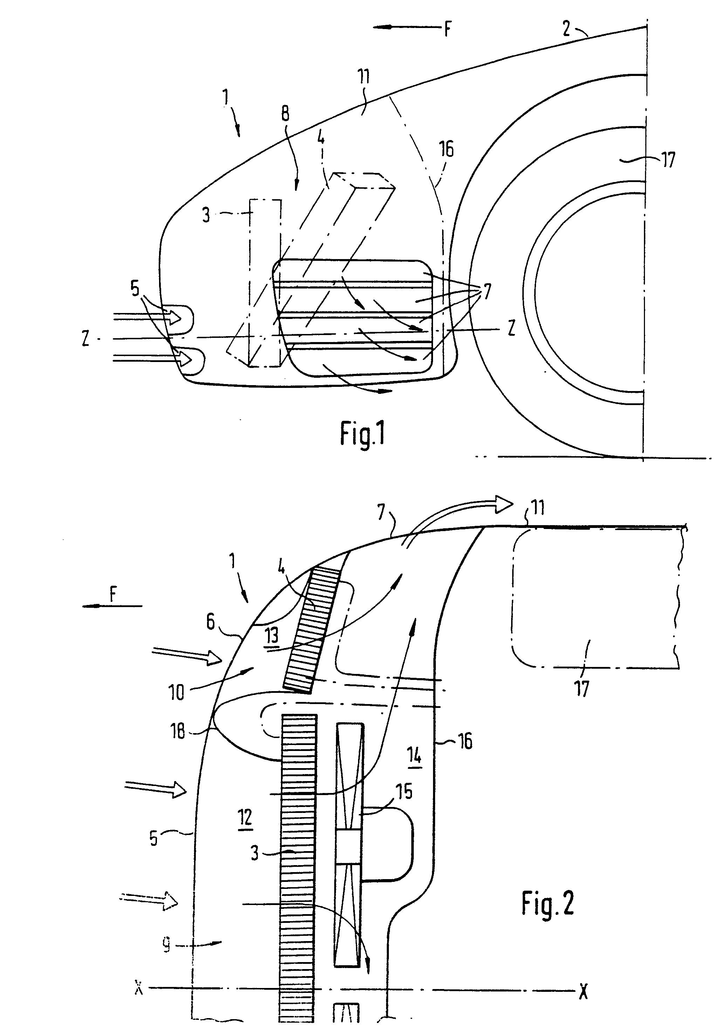

Fig. 1 eine Seitenansicht vom Bug eines Fahrzeugs mit schematisch angedeutetem Wasser und Ölkühler sowie von Luftzu- und -abführungsöffnungen, und

Fig. 2 eine Draufsicht zu Fig. 1.

Im Bugbereich 1 eines Kraftfahrzeugs 2 sind ein Wasserkühler 3 und ein Ölkühler 4 angeordnet. Über Zuführungsöffnungen 5 wird dem Wasserkühler 3 und über weitere Zuführungsöffnungen 6 wird dem Ölkühler 4 Luft zugeführt. Ein Austritt der Luft erfolgt über Abführungsöffnungen 7.

Die beiden Kühler 3 und 4 sind in einem Luftführungsgehäuse 8 angeordnet, das im wesentlichen allseitig geschlossen ist. Es weist einen ersten Raum 9 zur Aufnahme des Wasserkühlers 3 und einen über eine Wand 18 abgetrennten zweiten Raum 10 zur Aufnahme des Ölkühlers 4 auf. Jedem Raum 9 und 10 ist eine stirnseitige separate Luftzuführungsöffnung 5, 6 zugeordnet. Eine Luftabfuhr aus beiden Räumen 9, 10 erfolgt über die gemeinsame Öffnung 7. Diese ist in der etwa senkrecht verlaufenden Seitenwand 11 der Aufbaustruktur angeordnet und weist mehrere übereinander angeordnete Längsschlitze auf. Diese sind - in bezug auf die Fahrtrichtung - vor dem Vorderrad 17 angeordnet.

Der Wasserkühler 3 erstreckt sich zu beiden Seiten der Längsebene X-X des Fahrzeugs 2 im ersten Raum 9, wobei der Ölkühler 4 benachbart im zweiten Raum 10 angeordnet ist, der von der Seitenwand 11 begrenzt wird.

Die Aufnahmeräume 9 und 10 bilden - in bezug auf die Fahrtrichtung F - vor den Kühlern 3, 4 kanalartige Einlässe 12, 13, die im Bereich hinter den Kühlern 3, 4 einen durchgehenden Luftführungskanal 14 bilden, der von einer Querwand 16 des Fahrzeugs begrenzt wird. In diesem Kanal 14 sind hinter dem Wasserkühler 3 Ventilatoren 15 angeordnet.

Die Zuführungsöffnungen 5, 6 sind vorzugsweise in einem Überdruckbereich des Fahrzeugs 2 vorgesehen und zur schnellen Durchströmung etwa in gleicher horizontaler Ebene Z-Z mit der Abführungsöffnung 7 angeordnet, die vorzugsweise in einem Unterdruckbereich vorgesehen ist.

**Patentansprüche**

1. Kühleranordnung im Bug eines Kraftfahrzeugs mit stirnseitigen Luftzuführungsöffnungen und seitlichen Luftabführungsöffnungen, wobei die Kühler (3, 4) in einem abgetrennten Luftführungsgehäuse (8) angeordnet sind, das einen ersten Raum (9) zur Aufnahme eines Wasserkühlers (3) und einen zweiten Raum (10) zur Aufnahme eines Ölkühlers (4) aufweist und beide Räume (9, 10) eine stirnseitige Luftzuführungsöffnung (5, 6) aufweisen, dadurch gekennzeichnet, daß die Aufnahmeräume (9, 10) für die Kühler (3, 4) jeweils einen eigenen kanalartigen Lufteinlaß (12, 13) aufweisen und daß im Bereich der Rückseiten der Kühler (3, 4) ein durchgehender, sich quer im Fahrzeug erstreckender gemeinsamer Luftführungskanal (14) vorgesehen ist und daß der Kanal (14) fahrzeugseitige Luftabführungsöffnungen (7) aufweist.

2. Anordnung nach Anspruch 1, dadurch gekennzeichnet, daß der Aufnahmeraum (9) des Wasserkühlers (3) sich zu beiden Seiten der Längsmittelebene des Fahrzeugs und der weitere Aufnahmeraum (10) für den Ölkühler (4) sich anschließend bis etwa zur Seitenwand der Aufbaustruktur des Fahrzeugs erstreckt.

3. Anordnung nach den Ansprüchen 1 oder 2, dadurch gekennzeichnet, daß die Luftabführungsöffnungen (7) - in bezug auf die Fahrtrichtung F vor dem Rad (17) des Fahrzeugs (2) in der Seitenwand (11) der Karosserie angeordnet sind.

4. Anordnung nach einem oder mehreren der vorhergehenden Ansprüche, dadurch gekennzeichnet, daß die Luftzuführungsöffnungen (5, 6) und die Luftabführungsöffnungen (7) etwa in einer gleichen horizontalen Ebene (Z-Z) vorgesehen sind.

## Claims

1. A cooler arrangement in the nose of a motor vehicle with front air inlet openings and lateral air outlet openings, wherein the coolers (3, 4) are arranged in a separate air guiding housing (8) comprising a first chamber (9) for receiving a water cooler (3) and a second chamber (10) for receiving an oil cooler (4) and the two chambers (9, 10) comprise a front air inlet opening (5, 6), characterised in that the receiving chambers (9, 10) for the coolers (3, 4) each comprise their own duct-like air intake (12, 13) and in that a continuous common air-guiding duct (14) extending transversely in the vehicle is provided in the region of the rear sides of the coolers (3, 4) and in that the duct (14) comprises air outlet openings (7) on the side of the vehicle.

2. An arrangement according to claim 1, characterised in that the receiving chamber (9) for the water cooler (3) extends on either side of the longitudinal central plane of the vehicle and the other receiving chamber (10) for the oil cooler (4) extends adjacently approximately to the side wall of the vehicle structure.

3. An arrangement according to claims 1 or 2, characterised in that the air outlet openings (7) are arranged in front of the wheel (17) of the vehicle (2) with respect to the direction of travel F - in the side wall (11) of the vehicle body.

4. An arrangement according to one or more of the preceding claims, characterised in that the air inlet openings (5, 6) and the air outlet openings (7) are provided approximately in the same horizontal plane (Z-Z).

## Revendications

1. Agencement de radiateurs dans l'avant d'un véhicule à moteur, comportant des ouvertures d'entrée d'air du côté frontal et des ouvertures de sortie d'air latérales, selon lequel les radiateurs (3, 4) sont diposés dans un carénage de guidage d'air séparé (8), qui comporte une première chambre (9) pour loger un radiateur d'eau (3) et une seconde chambre (10) pour loger un radiateur d'huile (4) et les deux chambres (9, 10) comportent une ouverture d'entrée d'air frontale (5, 6), caractérisé en ce que les chambres (9, 10) logeant les radiateurs (3, 4) comportent respectivement leur propre entrée d'air en forme de canal (12, 13), en ce qu'on prévoit dans la zone des côtés postérieurs des radiateurs (3, 4) un canal de guidage d'air (14) commun continu, s'étendant transversalement dans le véhicule, et en ce que le canal (14) comporte des ouvertures d'évacuatien d'air (7) sur les côtés du véhicule.

2. Agencement selon la revendication 1, caractérisé en ce que la chambre (9) logeant le radiateur d'eau (3) s'étend de chaque côté du plan longitudinal médian du véhicule, et l'autre chambre (10) logeant le radiateur d'huile (4) se raccordant à la precedente s'étend sensiblement jusqu'à la paroi latérale de la structure de la carrosserie du véhicule.

3. Agencement selon les revendications 1 ou 2, caractérisé en ce que les ouvertures d'évacuation d'air (7) sont disposées en avant de la roue (17) du vehicule (2) - par rapport au sens de la marche F - dans la paroi latérale (11) de la carrosserie.

4. Agencement selon l'une ou plusieurs des revendications précédentes, caractérisé en ce que les ouvertures d'entrée d'air (5, 6) et les ouvertures de sortie d'air (7) sont prévues sensiblement dans un même plan horizontal (Z-Z).

**Fig.1**

**Fig.2**